# EUROPÄISCHE PATENTSCHRIFT

(11) **EP 3 608 369 B1**
(45) Veröffentlichungstag und Bekanntmachung des Hinweises auf die Patenterteilung: **19.05.2021**
(21) Anmeldenummer: 19020462.8
(22) Anmeldetag: 07.08.2019
(51) Int. Cl.: C09C 1/00, B42D 1/00, B44F 1/00, B44F 7/00, C09C 1/62, C09C 1/64, G11B 33/00, B42D 25/29, B42D 25/378

(54) **PLÄTTCHENFÖRMIGES EFFEKTPIGMENT ENTHALTEND EINE THERMOCHROME SCHICHT, DRUCKFARBE UND DATENTRÄGER**
PLATELET-SHAPED EFFECT PIGMENT COMPRISING A THERMOCHROMIC LAYER, PRINTING INK AND DATA CARRIER
PIGMENT À EFFET SOUS FORME DE PLAQUETTES COMPRENNANT UNE COUCHE THERMOCHROMIQUE, PEINTURE D'IMPRESSION ET SUPPORT D'ENREGISTREMENT

(30) Priorität: 09.08.2018 DE 102018006314
(43) Veröffentlichungstag der Anmeldung: 12.02.2020
(73) Patentinhaber: Giesecke+Devrient Currency Technology GmbH, 81677 München (DE)
(72) Erfinder: Dehmel, Raphael, 83115 Neubeuern (DE); Scherer, Maik Rudolf Johann, 82491 Grainau (DE); Scherer, Kai Herrmann, 81539 München (DE)

(56) Entgegenhaltungen:
- DE-A1-102007 043 052
- FUNG HSU WU ET AL: "Optical Switching Layer for Rewirtable Volumetric Optical Disks", JAPANESE JOURNAL OF APPLIED PHYSICS, Bd. 41, Nr. Part 1, No. 3B, 30. März 2002 (2002-03-30), Seiten 1683-1684, XP055648388, JP ISSN: 0021-4922, DOI: 10.1143/JJAP.41.1683
- QIYING CHEN ET AL: "Thermochromic thin film and its application in optical data storage", PROCEEDINGS OF SPIE, Bd. 4085, 7. Februar 2001 (2001-02-07), Seiten 121-124, XP055648376, 1000 20th St. Bellingham WA 98225-6705 USA ISSN: 0277-786X, DOI: 10.1117/12.416823 ISBN: 978-1-5106-2687-4

## Beschreibung

Die Erfindung betrifft ein plättchenförmiges Effektpigment, eine das plättchenförmige Effektpigment aufweisende Druckfarbe und einen mittels Bedrucken mit der Druckfarbe erzeugten Datenträger, insbesondere ein Wertdokument wie z.B. eine Banknote.

Datenträger, wie etwa Wert- oder Ausweisdokumente, oder andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Eine besondere Rolle bei der Echtheitsabsicherung spielen Sicherheitselemente mit betrachtungswinkelabhängigen Effekten, da diese selbst mit modernsten Kopiergeräten nicht reproduziert werden können. Die Sicherheitselemente werden dabei mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/ oder ein anderes graphisches Motiv zeigen.

Dünnschichtsysteme, die beim Betrachter mittels Interferenz einen betrachtungswinkelabhängigen Farbeindruck erzeugen, sind im Stand der Technik bekannt. Dieser optische Effekt kann als ein optisch variables Sicherheitselement dienen. Der Schichtaufbau besteht in der Regel aus einem Absorber, einem Dielektrikum und einem Reflektor, Einfallendes Licht trifft zunächst auf die Absorberschicht, wo Teile des Lichts reflektiert, absorbiert und transmittiert werden. Die transmittierten Teile durchqueren das Dielektrikum, werden an der Reflektorschicht zu einem großen Teil reflektiert, durchqueren erneut das Dielektrikum und treffen schließlich erneut auf den Absorber. Hier werden erneut Teile reflektiert, absorbiert und transmittiert. Die transmittierten Anteile interferieren mit den Anteilen, die an der ersten Grenzfläche reflektiert werden, und der Betrachter nimmt die Überlagerung beider Anteile wahr. Die Farbe des reflektierten Lichts wird beeinflusst von den optischen Eigenschaften der drei Schichten, und dem optischen Gangunterschied zwischen den beiden interferierenden Anteilen. Der Gangunterschied wiederum ist abhängig von Ein- und Ausfallswinkel des Lichts, wodurch sich eine auffällige optische Variabilität ergibt.

Derartige Dünnschichtsysteme kommen als Beschichtung in folienbasierten oder pigmentbasierten Sicherheitselementen zur Absicherung von Wertdokumenten zum Einsatz. Die laterale Anpassung der Reflexionseigenschaften ist gemäß Stand der Technik nur bei folienbasierten Sicherheitselementen und nur in begrenztem Ausmaß möglich: durch Wasch- oder Ätz-Schritte können einzelne oder mehrere Schichten der Dünnschichtsysteme lokal entfernt werden, oder die Dünnschichtsysteme können auf speziell strukturierte Oberflächen aufgebracht werden, was bei geschickter Wahl der Strukturen Farbänderungen zur Folge hat. Die erste Variante ermöglicht lediglich Kombinationen aus einer farbigen Reflexion mit durchsichtigen Bereichen, die zweite Variante ist mit aufwändigen Strukturierungsschritten verbunden.

Im Falle von pigmentbasierten Sicherheitselementen ist es unmöglich, die Reflexionseigenschaften lateral kontrolliert anzupassen, um z.B. ein Motiv zu erzeugen: Die Pigmente werden zwischen Herstellung und Applikation mehrfach vermischt, und gelangen daher in Form einer zufälligen Anordnung auf das Sicherheitselement.

Ebenfalls Stand der Technik sind sogenannte "Phase Change Materials" (PCMs). Dieser Begriff umfasst Materialien, deren optische Eigenschaften sich durch Hitzeeinwirkung verändern lassen. Dies kann beispielsweise durch Übergänge zwischen amorphen und kristallinen Phasen erreicht werden. Die für diese Übergänge nötige Hitze kann z.B. durch resistive Heizelemente oder durch Laserstrahlung zugeführt werden. Einsatzgebiete sind z.B. CD-RW-Medien oder DVD-RW-Medien. Als Materialien kommen z.B. Germanium-Antimon-Tellur oder Silber-Indium-Antimon-Tellur infrage. Im Rohzustand sind die Änderungen der optischen Eigenschaften nur wenig auffällig. In einer Interferenzbeschichtung können allerdings auch kleine Änderungen der optischen Eigenschaften eines Materials drastische Farbänderungen hervorrufen. In der EP 3 203 309 A1 wird die Anwendung eines solchen Materials als Absorberschicht einer Interferenzbeschichtung beschrieber Aus FUNG HSU WU ET AL.,JAPANESE JOURNAL OF APPLIED PHYSICS, Bd. 41, Nr. Part 1, No. 3B, 30. März 2002 sind thermochromatische Materialien bekannt. Aus QIYING CHEN ET AL., PROCEEDINGS OF SPIE, Bd. 4085, 7. Februar 2001 (2001-02-07), Seiten 121-124, ist ein Glassubstrat bekannt, welches mit einer thermochromen Schicht belegt ist. Aus der DE 10 2007 043052 A1 sind optisch schaltbare Materialien bekannt.

Die Aufgabe der vorliegenden Erfindung ist das Bereitstellen eines im Hinblick auf seine Attraktivität verbesserten, mit betrachtungswinkelabhängigen Effekten ausgestatteten Wertdokuments.

Diese Aufgabe wird auf Grundlage der in den unabhängigen Ansprüchen definierten Merkmalskombinationen gelöst.

Weiterbildungen der Erfindung sind Gegenstand der Unteransprüche. Zusammenfassung der Erfindung
1. (Erster Aspekt der Erfindung) Plättchenförmiges Effektpigment, umfassend eine optisch variable Interferenzbeschichtung, bei der zumindest eine Schicht aus einem Material besteht, dessen optische Eigenschaften mittels Einwirkung von Hitze veränderbar sind, wobei die Veränderung der optischen Eigenschaften auf Übergängen zwischen kristallinen und amorphen Materialzuständen basiert, wobei das Material, dessen optische Eigenschaften mittels Einwirkung von Hitze veränderbar sind, von der Gruppe von Materialien bestehend aus GeSbTe, VOx, NbOx, GeTe, GeSb, GaSb, AgInSbTe, InSb, InSbTe, InSe, SbTe, TeGeSbS, AgSbSe, SbSe, GeSbMnSn, AgSbTe, AuSbTe und AlSb gewählt ist, wobei die Stöchiometrie der vorstehend genannten Substanzen frei wählbar ist.
2. (Bevorzugte Ausgestaltung) Plättchenförmiges Effektpigment nach Absatz 1, wobei die Veränderung der optischen Eigenschaften reversibel oder irreversibel ist.
3. (Bevorzugte Ausgestaltung) Plättchenförmiges Effektpigment nach Absatz 1 oder 2, wobei die optischen Eigenschaften mittels Einwirkung von Hitze, nämlich mittels Bestrahlung mit Licht einer geeigneten Wellenlänge, z.B. Laserstrahlung, veränderbar sind.
4. (Bevorzugte Ausgestaltung) Plättchenförmiges Effektpigment nach einem der Absätze 1 bis 3, wobei das Effektpigment eine Schichtenfolge, bestehend aus einer Absorberschicht, einer dielektrischen Schicht und einer Reflektorschicht, aufweist und die Absorberschicht oder die dielektrische Schicht oder die Reflektorschicht aus dem Material besteht, dessen optische Eigenschaften mittels Einwirkung von Hitze veränderbar sind, wobei bevorzugt die Absorberschicht aus dem Material besteht, dessen optische Eigenschaften mittels Einwirkung von Hitze veränderbar sind.

Das plättchenförmige Effektpigment kann insbesondere die Schichtenfolge Träger(substrat) - Reflektorschicht - dielektrische Schicht - Absorberschicht aufweisen, wobei der Träger bzw. das Trägersubstrat optional ist.

Gemäß einer Variante kann das plättchenförmige Effektpigment einen symmetrischen Schichtaufbau aufweisen, z.B. mit der Schichtenfolge Absorberschicht - dielektrische Schicht - Reflektorschicht - dielektrische Schicht - Absorberschicht. In diesem Fall kann sich der optional vorhandene Träger bzw. das optional vorhandene Trägersubstrat z.B. zwischen der Reflektorschicht und einer der beiden dielektrischen Schichten befinden. Alternativ kann der optional vorhandene Träger bzw. das optional vorhandene Trägersubstrat endständig angeordnet sein, sodass der optional vorhandene Träger einseitig beschichtet ist mit der Schichtenfolge Absorberschicht - dielektrische Schicht - Reflektorschicht - dielektrische Schicht - Absorberschicht.
5. (Bevorzugte Ausgestaltung) Plättchenförmiges Effektpigment nach einem der Absätze 1 bis 4, wobei das Material, dessen optische Eigenschaften mittels Einwirkung von Hitze veränderbar sind, das die Absorberschicht bildende Material ist.
6. (Bevorzugte Ausgestaltung) Plättchenförmiges Effektpigment nach einem der Absätze 1 bis 5, wobei das Material, dessen optische Eigenschaften mittels Einwirkung von Hitze veränderbar sind, insbesondere das die Absorberschicht bildende Material, von der Gruppe von Materialien bestehend aus Ge₂Sb₂Te₅ und Ag₃In₄Sb₇₆Te₁₇ gewählt ist.
7. (Bevorzugte Ausgestaltung) Plättchenförmiges Effektpigment nach einem der Absätze 4 bis 6, wobei die Absorberschicht aus dem Material besteht, dessen optische Eigenschaften mittels Einwirkung von Hitze veränderbar sind, und die Absorberschicht eine Dicke in einem Bereich von 0,5 nm bis 80 nm, bevorzugt in einem Bereich von 3 nm bis 15 nm, aufweist.
8. (Bevorzugte Ausgestaltung) Plättchenförmiges Effektpigment nach einem der Absätze 1 bis 7, wobei die Reflektorschicht von Al oder Ag oder Ni oder Co oder einer Legierung eines oder mehrerer der vorstehend genannten Elemente gewählt ist, vorzugsweise ein Al-Schicht ist und vorzugsweise eine Dicke im Bereich von 10 nm bis 500 nm, weiter bevorzugt 20 nm bis 100 nm, insbesondere bevorzugt 20 nm bis 40 nm, aufweist.
9. (Bevorzugte Ausgestaltung) Plättchenförmiges Effektpigment nach einem der Absätze 1 bis 8, wobei die dielektrische Schicht eine SiO₂-Schicht, eine ZnS-Schicht, eine MgF₂-Schicht, eine Al₂O₃-Schicht, eine TiO₂-Schicht, eine NbOx-Schicht, eine VOₓ-Schicht, eine HfOₓ-Schicht oder eine ZrO₂-Schicht ist, vorzugsweise eine SiO₂-Schicht ist und vorzugsweise eine Dicke im Bereich von 40 nm bis 700 nm, insbesondere bevorzugt 200 bis 500 nm, aufweist.
10. (Bevorzugte Ausgestaltung) Plättchenförmiges Effektpigment nach einem der Absätze 1 bis 9, wobei die Pigmente magnetisch orientierbare Effektpigmente sind, wobei die Pigmente insbesondere eine magnetische Schicht aufweisen, die z.B. von Nickel, Cobalt, Eisen, einer FeSi-Legierung, NiCr, NiSiCr oder einer Legierung eines oder mehrerer der vorstehend genannten Elemente gewählt ist.
11. (Zweiter Aspekt der Erfindung) Druckfarbe, umfassend plättchenförmige Effektpigmente nach einem der Absätze 1 bis 10.

Die Druckfarbe kann z.B. eine physikalisch trocknende Druckfarbe sein, in der die plättchenförmigen Effektpigmente mittels eines geeigneten Bindemittels dispergiert sind. Die Druckfarbe kann des Weiteren eine UV-härtbare Druckfarbe sein, in der die plättchenförmigen Effektpigmente mittels eines geeigneten Bindemittels dispergiert sind. Eine UV-härtbare Druckfarbe ist insbesondere dann bevorzugt, wenn die plättchenförmigen Effektpigmente magnetisch orientierbare Effektpigmente sind.
12. (Dritter Aspekt der Erfindung) Datenträger, aufweisend einen mit der Druckfarbe nach Absatz 11 erzeugten, farbigen Merkmalsbereich.
13. (Bevorzugte Ausgestaltung) Datenträger nach Absatz 12, wobei der farbige Merkmalsbereich einen selektierten Bereich, insbesondere in Form eines Musters, in Form von Zeichen oder in Form einer Codierung, aufweist, mit mittels Einwirkung von Hitze erzeugten, veränderten optischen Eigenschaften, die verglichen mit den optischen Eigenschaften des den selektierten Bereich umgebenden farbigen Merkmalsbereichs maschinell und/oder visuell unterscheidbar sind.

Vorzugsweise ist der farbige Merkmalsbereich des selektierten Bereichs so beschaffen, dass die Veränderung der optischen Eigenschaften mittels Bestrahlung mit Licht einer geeigneten Wellenlänge, z.B. Laserstrahlung, herbeigeführt ist.
14. (Bevorzugte Ausgestaltung) Datenträger nach Absatz 12 oder 13, wobei der Datenträger ein Wertdokument, vorzugsweise eine Banknote, ist.

Das Wertdokument basiert insbesondere auf einem Wertdokumentsubstrat, z.B. ein Papiersubstrat, ein Kunststoffsubstrat, ein Folie/Papier/Folie-Verbundsubstrat (siehe z.B. die WO 2006/066431 A1) oder ein Papier/Folie/Papier-Verbundsubstrat (siehe z.B. die WO 2004/028825 A2).

### Ausführliche Beschreibung der bevorzugten Ausführungsformen

Der Erfindung liegt die Maßnahme zugrunde, ein Wertdokument, z.B. eine Banknote, mit einem attraktiven pigmentbasierten Sicherheitselement, d.h. einem farbigen Merkmalsbereich, auszustatten, wobei die Pigmente eine optisch variable Interferenzbeschichtung aufweisen, bei der zumindest eine Schicht zumindest teilweise aus einem Material besteht, dessen optische Eigenschaften durch eine kurzzeitige Hitzeeinwirkung dauerhaft verändert werden können. Die Veränderung der optischen Eigenschaften basiert auf Übergängen zwischen kristallinen und amorphen Zuständen und kann je nach Wahl des Materials reversibel oder irreversibel sein. Das Material, dessen optische Eigenschaften durch eine kurzzeitige Hitzeeinwirkung dauerhaft verändert werden kann, wird hierin auch als PCM-Material bezeichnet.

Eine reversible Veränderung der optischen Eigenschaften ist z.B. im Falle von GeSbTe als PCM-Material möglich.

Ein erfindungsgemäßes Wertdokument gemäß einer ersten bevorzugten Ausführungsform weist ein binäres Farbmotiv auf. Bei dem Wertdokument kann mittels lokaler Einwirkung von Hitze eine Veränderung der Farbe hervorgerufen werden. Auf diese Weise können verschiedenfarbige optisch variable Farben nahtlos miteinander kombiniert werden, was bei den folienbasierten oder pigmentbasierten Sicherheitselementen gemäß dem Stand der Technik nur mit hohem und nicht praktikablem Aufwand möglich ist.

Ein erfindungsgemäßes Wertdokument gemäß einer zweiten bevorzugten Ausführungsform wird mittels Laserstrahlung mit einem individuellen, d.h. einem das Wertdokument individualisierenden, Motiv versehen. Denkbar wäre z.B. die Wiederholung der Seriennummer einer Banknote, oder die Wiederholung lediglich eines Teils der Seriennummer der Banknote.

Ein erfindungsgemäßes Wertdokument gemäß einer dritten bevorzugten Ausführungsform weist eine Schicht mit fokussierenden Elementen mit identischen oder annähernd identischen Brennweiten auf, die bevorzugt in einem Bereich von 5 bis 50 µm, weiter bevorzugt in einem Bereich von 8 bis 20 µm, liegen. Wertdokumente mit auf fokussierenden Elementen basierenden Sicherheitselementen sind z.B. aus der WO 2006/087138 A1 bekannt. Unterhalb der die fokussierenden Elemente aufweisenden Schicht ist eine Schicht mit den die besondere optisch variable Interferenzbeschichtung aufweisenden Pigmenten so angeordnet, dass das PCM-Material im Wesentlichen in der Brennebene der fokussierenden Elemente liegt. Die fokussierenden Elemente können das Licht z.B. entlang einer Richtung fokussieren. In diesem Fall handelt es sich bei den fokussierenden Elemente z.B. um Zylinderlinsen. Weiterhin können die fokussierenden Elemente das Licht z.B. entlang zweier Richtungen fokussieren. In diesem Fall handelt es sich bei den fokussierenden Elementen z.B. um sphärische Linsen. Wenn mehrere Motive unter verschiedenen Einfallswinkeln (d.h. entlang der Fokussierungsrichtung) mittels Laserstrahlung in der das PCM-Material aufweisenden optisch variablen Interferenzbeschichtung der Pigmente erzeugt werden, sind die Motive nur bei Betrachtung aus der entsprechenden Richtung sichtbar. Im Falle von Zylinderlinsen ist z.B. bei der Betrachtung in einem senkrecht zur Fokussierungsrichtung angeordneten Betrachtungswinkel kein Motiv erkennbar. Auf diese Weise können z.B. versteckte Motive, Wechselbilder, Animationen oder ähnliche Bildgestaltungen realisiert werden.

Ein erfindungsgemäßes Wertdokument gemäß einer vierten bevorzugten Ausführungsform basiert auf einem reversibel modifizierbaren PCM-Material, d.h. die Pigmente weisen eine optisch variable Interferenzbeschichtung auf, bei der zumindest eine Schicht zumindest teilweise aus einem Material besteht, dessen optische Eigenschaften durch eine kurzzeitige Hitzeeinwirkung dauerhaft, aber reversibel, verändert werden können. Zur Authentisierung des Sicherheitselements kann z.B. eine Vorrichtung eingesetzt werden, durch die zunächst die gesamte Fläche des Sicherheitselements in einen ersten optischen Zustand versetzt wird. Dies geschieht insbesondere durch Laserpulse mit einer geeigneten Pulsform, insbesondere mit geeigneter Puls-Intensität und/oder Puls-Dauer. Anschließend wird selektiv ein bestimmter Motivbereich des Sicherheitselements in einen zweiten optischen Zustand versetzt. Dies geschieht insbesondere durch Laserpulse mit einer geeigneten Pulsform, insbesondere mit geeigneter Puls-Intensität und/oder Puls-Dauer. Falls das erwartete Motiv im Sicherheitselement erkennbar ist, ist das mit dem Sicherheitselement ausgestattete Wertdokument echt.

Ein weiterer Aspekt der Erfindung betrifft einen mit der die erfindungsgemäßen Effektpigmente aufweisenden Druckfarbe bedruckten Datenträger, wobei der Datenträger als optischer Datenträger dient, indem wie im Falle einer CD oder DVD Daten in Form einer Abfolge binärer Reflektivitäten in die mit den Pigmenten modifizierte Oberfläche des Datenträgers geschrieben werden.

Ein erfindungsgemäßes plättchenförmiges Effektpigment kann insbesondere auf einem optionalen, plättchenförmigen Träger basieren, der z.B. von Glimmer, synthetischem Glimmer, Aluminiumoxid, Siliciumdioxid oder Glas gewählt ist. Der optional vorhandene Träger kann mit der das PCM-Material aufweisenden Schicht und den weiteren, den optisch variablen Effekt erzeugenden Schichten beschichtet werden. Je nach Material kann ein Mahlschritt folgen, abschließend kann das Material zweckmäßigerweise je nach Teilchengröße klassiert werden. Die Größe der entstehenden Flakes bzw. Plättchen kann lateral bis zu wenige Mikrometer betragen, die Größe bewegt sich jedoch zumeist in einem Bereich von 2µm bis 100µm. Der vertikale Aufbau eines Plättchens ist durch die Anforderungen an die Interferenzschichten gegeben und ist in der Regel so dünn wie möglich, z.B. in einem Bereich von 200 nm bis 1500 nm.

Weiterhin bekannt ist die Möglichkeit, die den Farbeindruck erzeugenden Dünnschichtsysteme auf ein ferromagnetisches Material aufzubringen. Somit besitzen die Pigmentplättchen ein magnetisches Moment. Magnetisch orientierbare Effektpigmente sind z.B. kommerziell unter dem Handelsnamen OVMI® der Firma SICPA erhältlich (die Abkürzung OVMI steht für den Begriff "optically variable magnetic ink").

Im Stand der Technik ist es bekannt, Farbpigmente, die ein magnetisches Moment besitzen, für das Bereitstellen optisch variabler Sicherheitselemente einzusetzen. Hierzu werden die Pigmente in ein transparentes Bindemittel eingebracht. Mittels eines externen Magnetfelds kann die Ausrichtung der Pigmente unmittelbar nach dem Druck auf einen Bedruckstoff, z.B. Papier, beeinflusst werden. Anschließend wird das Bindemittel z.B. mittels UV-Bestrahlung ausgehärtet, um die Ausrichtungen der Pigmente zu fixieren. Durch ein geschicktes Einstellen des räumlichen Verlaufs der Pigmentausrichtungen ist es möglich, das bedruckte Substrat mit optischen Bewegungseffekten auszustatten.

Die Vorteile der Erfindung werden nachfolgend anhand der schematisch stark vereinfachten Figuren erläutert, bei deren Darstellung auf eine maßstabs- und proportionsgetreue Wiedergabe verzichtet wurde, um die Anschaulichkeit zu erhöhen.

Es zeigen:
Figur 1 ein Ausführungsbeispiel für ein erfindungsgemäßes plättchenförmiges Effektpigment;
Figur 2 ein erfindungsgemäßes Wertdokument gemäß einem Ausführungsbeispiel; und
Figur 3 ein weiteres erfindungsgemäßes Wertdokument gemäß einem weiteren Ausführungsbeispiel.

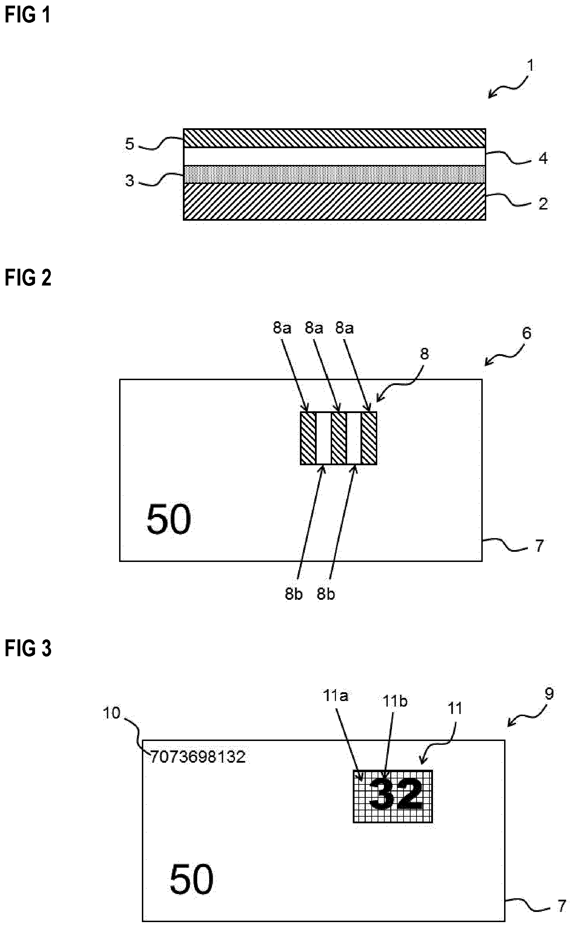

Die Figur 1 zeigt ein Ausführungsbeispiel für ein erfindungsgemäßes plättchenförmiges Effektpigment 1. Das Pigment 1 basiert auf einem aus Al₂O₃ gebildeten plättchenförmigen Träger 2, der mit einer die Schichten 3, 4 und 5 aufweisenden optisch variablen Interferenzbeschichtung beschichtet ist. Die Schicht 3 ist eine aus Aluminium gebildete Reflektorschicht. Oberhalb der reflektierenden Schicht 3 ist eine aus SiO₂ gebildete, dielektrische Schicht 4 angeordnet. Die Schicht 5 ist aus Ge₂Sb₂Te₅ gebildet. Die optischen Eigenschaften der Schicht 5 sind mittels Einwirkung von Hitze veränderbar, wobei die Veränderung der optischen Eigenschaften auf Übergängen zwischen kristallinen und amorphen Materialzuständen basiert. Der Träger 2 ist lediglich optional, kann also weggelassen werden.

Gemäß einem weiteren Ausführungsbeispiel, das in den Figuren nicht gezeigt ist, kann das Effektpigment den folgenden, symmetrischen Schichtaufbau aufweisen: Ge₂Sb₂Te₅-SiO₂ - Aluminium - SiO₂-Ge₂Sb₂Te₅.

Die Figur 2 zeigt ein erfindungsgemäßes Wertdokument 6, im Beispiel eine Banknote mit der Denomination "50", gemäß einem Ausführungsbeispiel. Das Wertdokument 6 basiert auf einem Papiersubstrat 7, das einen bedruckten Bereich 8 mit ersten Teilbereichen 8a und zweiten Teilbereichen 8b aufweist. Der Bereich 8 bildet damit ein binäres Farbmotiv. Die Teilbereiche 8a sind mit einer die Pigmente 1 gemäß der Figur 1 aufweisenden Druckfarbe bedruckt. Die Teilbereiche 8a sind bei einer Betrachtung des Wertdokuments 6 in einem ersten Betrachtungswinkel rötlich. Bei der Betrachtung des Wertdokuments 6 in einem zweiten Winkel, der z.B. um 60° vom ersten Betrachtungswinkel abweicht, weisen die Teilbereiche 8a eine gelbe Farbe auf. Sobald das Wertdokument 6 im bedruckten Bereich 8 Wärme ausgesetzt wird, z.B. durch Bestrahlung mittels einer geeigneten Laserstrahlung, geht das Material der Schicht 5 des Pigments 1 aus dem kristallinen Zustand in den amorphen Zustand über, was zu einer Veränderung der optischen Eigenschaften führt: die Teilbereiche 8a weisen nun bei der Betrachtung des Wertdokuments 6 im ersten Betrachtungswinkel eine bläuliche Farbe und bei der Betrachtung des Wertdokuments 6 im zweiten Betrachtungswinkel eine rötliche Farbe auf.

Die Teilbereiche 8b sind mit kommerziell erhältlicher optisch variabler Druckfarbe (sogenannte OVI-Farbe) bedruckt. Die Teilbereiche 8b besitzen z.B. einen blickwinkelabhängigen Farbwechsel von Grün zu Braun oder von Grün zu Violett.

In einer Variante zu dem vorangehenden Ausführungsbeispiel ist der gesamte Bereich 8 des Wertdokuments 6 ausschließlich mit der die Pigmente 1 gemäß der Figur 1 aufweisenden Druckfarbe bedruckt. Lediglich die Teilbereichen 8a werden dann ortsspezifisch erhitzt, z.B. durch Bestrahlung mittels eines geeigneten Lasers, und weisen anschließend einen blickwinkelabhängigen Farbwechsel von Blau zu Rot auf, der auf den amorphen Zustand des Materials der Schicht 5 des Pigments 1 zurückgeht. Die nicht mit Laser behandelten Teilbereiche 8b weisen einen blickwinkelabhängigen Farbwechsel von Rot zu Gelb auf.

Da mittels einer geeigneten Laservorrichtung komplexe und filigrane, mit Laserstrahlung behandelte Oberflächen erzeugbar sind, können verschiedenfarbige, optisch variable Farbbereiche nahtlos miteinander verknüpft werden.

Die Figur 3 zeigt ein weiteres erfindungsgemäßes Wertdokument 9 gemäß einem weiteren Ausführungsbeispiel. Das Wertdokument 9, im Beispiel eine Banknote mit der Denomination "50", basiert auf einem Papiersubstrat 7 und besitzt eine drucktechnisch mit herkömmlicher schwarzer Druckfarbe erzeugte Seriennummer 10 mit der Ziffernfolge "7073698132". Der Bereich 11 des Wertdokuments 9 ist ausschließlich mit der die Pigmente 1 gemäß der Figur 1 aufweisenden Druckfarbe bedruckt. Lediglich der in Form der letzten beiden Ziffern "32" der Seriennummer 10 gebildete Teilbereich 11a wird nach dem Bedrucken ortsspezifisch erhitzt, z.B. durch Bestrahlung mittels eines geeigneten Lasers, und weist anschließend einen blickwinkelabhängigen Farbwechsel von Blau zu Rot auf, der auf den amorphen Zustand des Materials der Schicht 5 des Pigments 1 zurückgeht. Der nicht mit Laser behandelte Teilbereich 8b weist einen blickwinkelabhängigen Farbwechsel von Rot zu Gelb auf.

## Patentansprüche

1. Plättchenförmiges Effektpigment, umfassend eine optisch variable Interferenzbeschichtung, bei der zumindest eine Schicht aus einem Material besteht, dessen optische Eigenschaften mittels Einwirkung von Hitze veränderbar sind, wobei die Veränderung der optischen Eigenschaften auf Übergängen zwischen kristallinen und amorphen Materialzuständen basiert, wobei das Material, dessen optische Eigenschaften mittels Einwirkung von Hitze veränderbar sind, von der Gruppe von Materialien bestehend aus GeSbTe, VOx, NbOx, GeTe, GeSb, GaSb, AgInSbTe, InSb, InSbTe, InSe, SbTe, TeGeSbS, AgSbSe, SbSe, GeSbMnSn, AgSbTe, AuSbTe und AlSb gewählt ist, wobei die Stöchiometrie der vorstehend genannten Substanzen frei wählbar ist.

2. Plättchenförmiges Effektpigment nach Anspruch 1, wobei die Veränderung der optischen Eigenschaften reversibel oder irreversibel ist.

3. Plättchenförmiges Effektpigment nach Anspruch 1 oder 2, wobei die optischen Eigenschaften mittels Einwirkung von Hitze, nämlich mittels Bestrahlung mit Licht einer geeigneten Wellenlänge, z.B. Laserstrahlung, veränderbar sind.

4. Plättchenförmiges Effektpigment nach einem der Ansprüche 1 bis 3, wobei das Effektpigment eine Schichtenfolge, bestehend aus einer Absorberschicht, einer dielektrischen Schicht und einer Reflektorschicht, aufweist und die Absorberschicht oder die dielektrische Schicht oder die Reflektorschicht aus dem Material besteht, dessen optische Eigenschaften mittels Einwirkung von Hitze veränderbar sind, wobei bevorzugt die Absorberschicht aus dem Material besteht, dessen optische Eigenschaften mittels Einwirkung von Hitze veränderbar sind.

5. Plättchenförmiges Effektpigment nach einem der Ansprüche 1 bis 4, wobei das Material, dessen optische Eigenschaften mittels Einwirkung von Hitze veränderbar sind, das die Absorberschicht bildende Material ist.

6. Plättchenförmiges Effektpigment nach einem der Ansprüche 1 bis 5, wobei das Material, dessen optische Eigenschaften mittels Einwirkung von Hitze veränderbar sind, insbesondere das die Absorberschicht bildende Material, von der Gruppe von Materialien bestehend aus Ge₂Sb₂Te₅ und Ag₃In₄Sb₇₆Te₁₇ gewählt ist.

7. Plättchenförmiges Effektpigment nach einem der Ansprüche 4 bis 6, wobei die Absorberschicht aus dem Material besteht, dessen optische Eigenschaften mittels Einwirkung von Hitze veränderbar sind, und die Absorberschicht eine Dicke in einem Bereich von 0,5 nm bis 80 nm, bevorzugt in einem Bereich von 3 nm bis 15 nm, aufweist.

8. Plättchenförmiges Effektpigment nach einem der Ansprüche 1 bis 7, wobei die Reflektorschicht von Al oder Ag oder Ni oder Co oder einer Legierung eines oder mehrerer der vorstehend genannten Elemente gewählt ist, vorzugsweise ein Al-Schicht ist und vorzugsweise eine Dicke im Bereich von 10 nm bis 500 nm, weiter bevorzugt 20 nm bis 100 nm, insbesondere bevorzugt 20 nm bis 40 nm, aufweist.

9. Plättchenförmiges Effektpigment nach einem der Ansprüche 1 bis 8, wobei die dielektrische Schicht eine SiO₂-Schicht, eine ZnS-Schicht, eine MgF₂-Schicht, eine Al₂O₃-Schicht, eine TiO₂-Schicht, eine NbOₓ-Schicht, eine VOₓ-Schicht, eine HfOₓ-Schicht oder eine ZrO₂-Schicht ist, vorzugsweise eine SiO₂-Schicht ist und vorzugsweise eine Dicke im Bereich von 40 nm bis 700 nm, insbesondere bevorzugt 200 bis 500 nm, aufweist.

10. Plättchenförmiges Effektpigment nach einem der Ansprüche 1 bis 9, wobei die Pigmente magnetisch orientierbare Effektpigmente sind, wobei die Pigmente insbesondere eine magnetische Schicht aufweisen, die z.B. von Nickel, Cobalt, Eisen, einer FeSi-Legierung, NiCr, NiSiCr oder einer Legierung eines oder mehrerer der vorstehend genannten Elemente gewählt ist.

11. Druckfarbe, umfassend plättchenförmige Effektpigmente nach einem der Ansprüche 1 bis 10.

12. Datenträger, aufweisend einen mit der Druckfarbe nach Anspruch 11 erzeugten, farbigen Merkmalsbereich.

13. Datenträger nach Anspruch 12, wobei der farbige Merkmalsbereich einen selektierten Bereich, insbesondere in Form eines Musters, in Form von Zeichen oder in Form einer Codierung, aufweist, mit mittels Einwirkung von Hitze erzeugten, veränderten optischen Eigenschaften, die verglichen mit den optischen Eigenschaften des den selektierten Bereich umgebenden farbigen Merkmalsbereichs maschinell und/oder visuell unterscheidbar sind.

14. Datenträger nach Anspruch 12 oder 13, wobei der Datenträger ein Wertdokument, vorzugsweise eine Banknote, ist.

## Claims

1. A platelet-shaped effect pigment comprising an optically variable interference coating in which at least one layer consists of a material whose optical properties are changeable by means of the action of heat, wherein the change of the optical properties is based on transitions between crystalline and amorphous material states, wherein the material whose optical properties are changeable by means of the action of heat is selected from the group of materials consisting of GeSbTe, VOx, NbOx, GeTe, GeSb, GaSb, AgInSbTe, InSb, InSbTe, InSe, SbTe, TeGeSbS, AgSbSe, SbSe, GeSbMnSn, AgSbTe, AuSbTe and AlSb, wherein the stoichiometry of the aforementioned substances is freely selectable.

2. The platelet-shaped effect pigment according to claim 1, wherein the change of the optical properties is reversible or irreversible.

3. The platelet-shaped effect pigment according to claim 1 or 2, wherein the optical properties are changeable by means of the action of heat, namely by means of irradiation with light of a suitable wavelength, e.g. laser radiation.

4. The platelet-shaped effect pigment according to any of claims 1 to 3, wherein the effect pigment has a layer sequence consisting of an absorber layer, a dielectric layer and a reflector layer, and the absorber layer or the dielectric layer or the reflector layer consists of the material whose optical properties are changeable by means of the action of heat, wherein preferably the absorber layer consists of the material whose optical properties are changeable by means of the action of heat.

5. The platelet-shaped effect pigment according to any of claims 1 to 4, wherein the material whose optical properties are changeable by means of the action of heat is the material forming the absorber layer.

6. The platelet-shaped effect pigment according to any of claims 1 to 5, wherein the material whose optical properties are changeable by means of the action of heat, in particular the material forming the absorber layer, is selected from the group of materials consisting of Ge₂Sb₂Te₅ and Ag₃In₄Sb₇₆Te₁₇.

7. The platelet-shaped effect pigment according to any of claims 4 to 6, wherein the absorber layer consists of the material whose optical properties are changeable by means of the action of heat, and the absorber layer has a thickness in a region from 0.5 nm to 80 nm, preferably in a region from 3 nm to 15 nm.

8. The platelet-shaped effect pigment according to any of claims 1 to 7, wherein the reflector layer is selected from A1 or Ag or Ni or Co or an alloy of one or several of the aforementioned elements, preferably is an A1 layer and preferably has a thickness in the region from 10 nm to 500 nm, further preferably 20 nm to 100 nm, particularly preferably 20 nm to 40 nm.

9. The platelet-shaped effect pigment according to any of claims 1 to 8, wherein the dielectric layer is an SiO₂ layer, a ZnS layer, an MgF₂ layer, an Al₂O₃ layer, a TiO₂ layer, an NbOₓ layer, a VOₓ layer, an HfOₓ layer or a ZrO₂ layer, preferably an SiO₂ layer, and preferably has a thickness in the region from 40 nm to 700 nm, more preferably 200 to 500 nm.

10. The platelet-shaped effect pigment according to any of claims 1 to 9, wherein the pigments are magnetically orientable effect pigments, wherein the pigments in particular have a magnetic layer which is selected from e.g. nickel, cobalt, iron, an FeSi alloy, NiCr, NiSiCr or an alloy of one or several of the aforementioned elements.

11. A printing ink comprising platelet-shaped effect pigments according to any of claims 1 to 10.

12. A data carrier having a coloured feature region produced with the printing ink of claim 11.

13. The data carrier according to claim 12, wherein the coloured feature region has a selected region, in particular in the form of a pattern, in the form of characters or in the form of a coding, with changed optical properties produced by means of the action of heat, which compared to the optical properties of the coloured feature region surrounding the selected region are machine-distinguishable and/or visually distinguishable.

14. The data carrier according to claim 12 or 13, wherein the data carrier is a value document, preferably a bank note.

## Revendications

1. Pigment à effets en forme de paillettes comprenant un revêtement interférentiel optiquement variable dans lequel au moins une couche consiste en un matériau dont les propriétés optiques peuvent être modifiées par action de la chaleur, cependant que la modification des propriétés optiques est basée sur des transitions entre des états de matériau cristallins et amorphes, cependant que le matériau dont les propriétés optiques peuvent être modifiées par action de la chaleur est choisi dans le groupe de matériaux consistant en GeSbTe, VOx, NbOx, GeTe, GeSb, GaSb, AgInSbTe, InSb, InSbTe, InSe, SbTe, TeGeSbS,AgSbSe, SbSe, GeSbMnSn, AgSbTe, AuSbTe et AlSb, cependant que la stœchiométrie des substances mentionnées ci-dessus peut être choisie librement.

2. Pigment à effets en forme de paillettes selon la revendication 1, cependant que la modification des propriétés optiques est réversible ou irréversible.

3. Pigment à effets en forme de paillettes selon la revendication 1 ou 2, cependant que les propriétés optiques peuvent être modifiées par action de la chaleur, à savoir par irradiation avec de la lumière d'une longueur d'ondes appropriée, par exemple par rayonnement laser.

4. Pigment à effets en forme de paillettes selon une des revendications de 1 à 3, cependant que le pigment à effets comprend une succession de couches consistant en une couche absorbante, une couche diélectrique et une couche réfléchissante, et la couche absorbante et la couche diélectrique ou la couche réfléchissante consiste en le matériau dont les propriétés optiques peuvent être modifiées par action de la chaleur, cependant que, de préférence, la couche absorbante consiste en le matériau dont les propriétés optiques peuvent être modifiées par action de la chaleur.

5. Pigment à effets en forme de paillettes selon une des revendications de 1 à 4, cependant que le matériau dont les propriétés optiques peuvent être modifiées par action de la chaleur est le matériau constituant la couche absorbante.

6. Pigment à effets en forme de paillettes selon une des revendications de 1 à 5, cependant que le matériau dont les propriétés optiques peuvent être modifiées par action de la chaleur, en particulier le matériau constituant la couche absorbante, est choisi dans le groupe de matériaux consistant en Ge₂Sb₂Te₅ et Ag₃In₄Sb₇₆Te₁₇.

7. Pigment à effets en forme de paillettes selon une des revendications de 4 à 6, cependant que la couche absorbante consiste en le matériau dont les propriétés optiques peuvent être modifiées par action de la chaleur, et la couche absorbante a une épaisseur comprise entre 0,5 nm et 80 nm, de préférence comprise entre 3 nm et 15 nm.

8. Pigment à effets en forme de paillettes selon une des revendications de 1 à 7, cependant que la couche réfléchissante est choisie parmi Al ou Ag ou Ni ou Co ou un alliage d'un ou de plusieurs des éléments mentionnés ci-dessus, de préférence une couche Al et de préférence une une épaisseur comprise entre 10 nm et 500 nm, en outre de préférence comprise entre 20 nm et 100 nm, particulièrement de préférence comprise entre 20 nm et 40 nm.

9. Pigment à effets en forme de paillettes selon une des revendications de 1 à 8, cependant que la couche diélectrique est une couche SiO₂, une couche ZnS, une couche MgF₂, une couche Al₂O₃, une couche TiO₂, une couche NbOₓ, une couche Voₓ, une couche HfOₓ ou une couche ZrO₂, de préférence une couche SiO₂, et a de préférence une épaisseur comprise entre 40 nm et 700 nm, particulièrement de préférence comprise entre 200 nm et 500 nm.

10. Pigment à effets en forme de paillettes selon une des revendications de 1 à 9, cependant que les pigments sont des pigments à effets magnétiquement orientables, cependant que les pigments comprennent en particulier une couche magnétique qui est par exemple choisie parmi nickel, cobalt, fer, un alliage FeSi, NiCr, NiSiCr ou un alliage d'un ou de plusieurs des éléments mentionnés ci-dessus.

11. Encre d'impression comprenant des pigment à effets en forme de paillettes selon une des revendications de 1 à 10.

12. Support de données comprenant une zone caractéristique colorée générée avec l'encre d'impression selon la revendication 11.

13. Support de données selon la revendication 12, cependant que la zone caractéristique colorée comporte une zone sélectionnée, en particulier sous forme d'un motif, sous forme de caractères ou sous forme d'une codification, ayant des propriétés optiques qui peuvent être modifiées par action de la chaleur et qui, en comparaison avec les propriétés optiques de la zone caractéristique colorée entourant la zone sélectionnée, peuvent être différenciées à la machine et/ou visuellement.

14. Support de données selon la revendication 12 ou 13, cependant que le support de données est un document de valeur, en particulier un billet de banque.
